# EUROPEAN PATENT SPECIFICATION

(11) **EP 4 507 867 B1**
(45) Date of publication and mention of the grant of the patent: **08.04.2026**
(21) Application number: 23723256.6
(22) Date of filing: 13.04.2023
(51) Int. Cl.: B29B 17/00, B29B 17/04, B29K 75/00, B29K 77/00, B29L 31/00, B29L 31/48

(54) **MECHANICAL RECYCLING OF MULTICOMPONENT POLYMERIC WASTE COMPRISING POLYAMIDE AND POLYURETHANE**
MECHANISCHES RECYCLING VON MEHRKOMPONENTEN-POLYMERABFÄLLEN MIT POLYAMID UND POLYURETHAN
RECYCLAGE MÉCANIQUE DE DÉCHETS POLYMÈRES MULTICOMPOSANTS COMPRENANT DU POLYAMIDE ET DU POLYURÉTHANE

(30) Priority: 14.04.2022 IT 202200007520
(43) Date of publication of application: 19.02.2025
(73) Proprietor: Consorzio Radici per la Ricerca e L'Innovazione S.c.a.R.l., 24121 Bergamo (IT); Radici Novacips S.P.A., 24040 Chignolo d'Isola (IT); Radici Yarn S.p.A., 24121 Bergamo (IT)
(72) Inventor: SUARDI, Ambra, 24024 Gandino (IT); PEDUTO, Nicolangelo, 20131 Milano (IT)
(74) Representative: Palladino, Saverio Massimo
(86) International application number: PCT/IB2023/053769
(87) International publication number: WO 2023/199251

(56) References cited:
- WO-A1-2013/032408
- DE-A1- 4 328 195
- JP-A- 2008 239 985
- KUNCHIMON SITI ZAHARAH ET AL: "Polyamide 6 and thermoplastic polyurethane recycled hybrid Fibres via twin-screw melt extrusion", JOURNAL OF POLYMER RESEARCH, SPRINGER NETHERLANDS, DORDRECHT, vol. 26, no. 7, 11 June 2019 (2019-06-11), pages 1 - 14, XP036842182, ISSN: 1022-9760, [retrieved on 20190611], DOI: 10.1007/S10965-019-1827-0

## Description

### FIELD OF THE INVENTION

The present invention refers to a process for the recycling of multicomponent polymeric waste comprising a polyamide and a polyurethane coming from industrial or post-consumer processing, otherwise intended for incineration or landfill, which provides for the mechanical treatment of such waste.

### BACKGROUND OF THE INVENTION

Because of the growing problems of consumption of non-renewable raw materials and of accumulation of waste, the search for recyclable materials and processes for their end-of-life reuse is underway in all industry sectors, in order to obtain new sustainable raw materials.

The new products made using at least in part waste materials recovered at the end of life of other products are generally referred to in the sector by the abbreviation PCR ("Post Consumer Recycled"), while those made using processing waste are generally referred to in the sector by the abbreviation PIR ("Post Industrial Recycled"). PCR or PIR type products can find useful application in the automotive sector, in the electrical and electronic and consumer goods sector, which can be produced both with traditional technologies (e.g. injection moulding) and with new technologies (e.g. 3D printing).

Recovering and reusing of waste of thermoplastic materials, both monocomponents and chemically compatible polymer mixtures, is a well-known and commonly used process. Textile waste consisting of mixtures of thermodynamically compatible polymers is first subjected to cleaning operations to remove non-plastic material (cotton, primers, etc.) and then remelted and formulated with different types of additives, such as glass fibre, mineral fillers and other additives.

Major problems are encountered with waste, both post-consumer and production one, formed by the physical coupling of polymers that are thermodynamically incompatible with each other. For the recycling thereof, this waste generally requires the mechanical or chemical separation of the two thermodynamically incompatible components, because their simple reuse into new products would lead to demixing or in any case to mechanical problems.

Some important waste materials are constituted by the physical coupling of polyamide parts and polyurethane parts; examples of waste materials of this type are wheels for trolleys, articles made by overmoulding the two polymers and, in particular, fabrics.

The treatment of waste constituted by coupling polymeric materials that are chemically incompatible with each other is the subject of several patent publications.

French patent application FR 2907124 A1 relates to the separation of silicone from plastics using carbene derivatives; the system of this application, however, makes use of unstable reagents and it is therefore not easily implementable in an industrial process.

Japanese patent applications JP 2008-031127 A and JP 2011-088943 A relate to the separation of polyurethane from polyamides by selective dissolution of the former with solvents such as N,N-dimethylformamide, dimethylsulfoxide, or aqueous solutions of solvents such as N-methylpyrrolidone, 2-pyrrolidone and 2-piperidone. The recovered polymers can then be reused by remelting, or through processes of chemical depolymerization and re-polymerization of the monomers/oligomers thus obtained. However, this method involves using large amounts of solvents; in addition to the fact that the solvents are often toxic and/or hazardous and therefore their use involves risks for the health of operators and for the environment, these compounds must then be recovered and purified for their reuse, an operation that generally requires the use of high amounts of energy (for example, for the selective evaporation of the solvents).

There are also methods that combine chemical and thermal treatments for the separation of different polymers; for example, international patent application WO 2013/032408 A1 describes a method for separating polyurethane from polyamide avoiding the use of aggressive solvents such as those reported in the aforementioned Japanese patent applications, through a selective and partial thermal degradation treatment of the polyurethane (at temperatures between about 190 and 215 °C) and treatment of the material resulting from the previous step with an organic polar solvent, for example ethanol. This method, even if it leads to more efficient recoveries of polymeric materials of interest, still presents the above-mentioned problem of the use and of the recovery of the solvents, further aggravated by the energy consumption in the first step of heat treatment.

Patent application DE 4328195 A1 describes a method for the recovery of mixed polyamide-polyurethane textile waste consisting of a treatment of a few minutes in a nitrate solution of an alkaline earth metal (preferably magnesium nitrate) followed by a thermal drying at 120-150 °C; in the text it is said that this treatment degrades the structure of the textile fibres and makes them easier to recover in the formation of composite panels with wood fibres, as well as being more easily attackable by bacteria present in the soil in the case of landfilling.

Alternatively, textile waste constituted by chemically incompatible polymeric materials can be used without prior separation, after a simple mechanical treatment of coarse grinding, but only with a strong dilution (below 10% by weight) with virgin polymer, in order to avoid mechanical or aesthetic problems in the step of subsequent transformation of the formulation. This method leads to the definition of PCR and PIR with obvious application constraints. Moreover, this application mode does not constitute an efficient waste recovery mode, because the fraction of waste materials in the new formulations is very low, and largely based on the use of virgin polymers.

Object of the present invention is to make available a method for recovering multicomponent polymeric waste materials comprising a polyamide and a polyurethane that does not require the use of chemical solvents, and that allows their reuse, in the formulation of new products, in proportions higher than those of the currently known techniques.

### SUMMARY OF THE INVENTION

This object is achieved with the present invention, with a process comprising the following steps:
a) mechanical grinding of the multicomponent polymeric waste material, comprising a polyamide and a polyurethane, to obtain a granulate consisting of particles smaller than 1 mm, preferably smaller than 500 µm, and even more preferably smaller than 250 µm;
b) addition of the granulate obtained in step a) to a virgin polymer corresponding to, or chemically compatible with, the majority component of the multicomponent polymeric waste material, in a quantity such that the weight ratio between the multicomponent polymeric waste material and the virgin polymer is between 1:3 and 4:1, obtaining a first mixture;
c) addition to the mixture of step b) of a compatibilizer selected between a polyetheramide of relative viscosity in m-cresol between 1.18 and 1.38 and a novolac with a weight average molecular weight, M_{w}, between 3500 and 6000, in a quantity such that the weight of the compatibilizer is between 0.8 and 1.2 times the weight of the minority component of the multicomponent polymeric waste material, and preferably is equal to the weight of said minority component, obtaining a second mixture;
d) forming an article using said second mixture as starting material;
wherein steps b) and c) can be performed sequentially or simultaneously.

The invention also concerns materials and articles obtained by means of the process.

### BRIEF DESCRIPTION OF THE DRAWINGS

Fig. 1 shows photographs at different magnifications obtained with scanning electron microscopy of a sample of material produced with a granulate of the invention and, for comparison, with a granulate not of the invention;
Fig. 2 shows photographs of specimens produced according to the invention and not of the invention;
Fig. 3 shows two photographs obtained with scanning electron microscope of a sample of material produced with a granulate of the invention and, for comparison, with a granulate not of the invention.

### DETAILED DESCRIPTION OF THE INVENTION

In the remainder of the description, all percentages are by weight unless otherwise indicated.

Steps b) and c) of the process have thus been indicated for clarity of reference in the description, but this indication does not involve any necessary order of execution; for example, step b) may be performed before step c), but in a preferred embodiment of the invention these two steps are performed simultaneously.

By the definition "chemically incompatible polymers" is meant two (or more) polymers which, if used in a process of formation of a plastic article, for example by meltingextrusion-moulding, would give rise to melt-demixing with consequent impossibility of controlling the distribution of the different phases and the characteristics of the finished product. Conversely, "chemically compatible polymers" means polymers which are different, but which do not give rise to such demixing phenomena.

Among the waste constituted by coupling polyamides and polyurethanes, of particular importance are the textile products, which have an advantage from the point of view of the basic properties (batch repeatability), a factor that allows to achieve the quality standards required for different applications in the plastic sector, fully following the principles of a circular economy. Given the importance of textile waste, particular reference will be made thereto in the remainder of the description, but it will be clear to those skilled in the art that the invention is generally applicable to waste of any type.

In the first step of the process, a), the multicomponent polymeric waste material is ground by mechanical grinding.

Textile waste suitable for the purposes of the invention is typically constituted by a majority component and a minority component. The majority component is typically present in the waste for a fraction by weight of between 70 and 90%; typical majority components of textile waste are the polyamides known in the sector as PA6 and PA66, whereas a typical minority component is elastane, a form of thermosetting elastic polyurethane, which is used to convey elasticity to the fabric. The exact content of fabric components is generally known from the labels in the case of end-of-life items of clothing, and is always known precisely in the industrial production waste.

This waste (both deriving from end-of-life items of clothing and processing waste) is ground with methods known in the sector, using for example blade mills, and regranulated by extrusion, using a single screw force-feed extruder.

On the thus regranulated material a further grinding is then performed obtaining a granulate in which the particles are smaller than 1 mm, preferably smaller than 500 µm, and even more preferably smaller than 250 µm. Since they are polyamide-based waste, i.e. ductile materials, it is necessary to proceed by cold grinding, a process that allows an extreme embrittlement of the material using liquid nitrogen. Cryogenic pulverization significantly improves the breakage of the sample. The desired particle size fraction is selected using sieves, which allow a controlled distribution of the dimensions of the powder. The choice of the sieve affects not only the result of the distribution, but also the production yield. It is preferable to proceed by pulverization followed by sieving with a 250 µm sieve, in order to reach a good compromise between production yield and suitable sizes of the powder. Sieves are widely commercially available, and the sizes of their gaps are generally defined by the "mesh" scale; a sieve that selects (i.e., allows to pass through its "gaps") particles smaller than 250 µm is a 60-mesh sieve.

In step b) of the process the granulate obtained in the previous step is added to a virgin polymer, which is generally also in granulated form with sizes generally, but not necessarily, larger than those of the granulate obtained in step a). The virgin polymer is the same polymer as the majority component of the starting textile waste, or a polymer that is chemically compatible with it (in the sense indicated above). The granulate obtained from waste and the virgin polymer are mixed in a quantity such that their weight ratio is between 1:3 and 4:1; in the first mixture thus obtained the waste content can therefore vary between 25% and 80% by weight. The method of the invention would of course also work with quantities of waste lower than 25%, but such reduced quantities of waste can be used in recycling materials also with methods of the prior art and the adoption of the process of the invention with the use of a compatibilizer would not be justified in this case. With a quantity of waste greater than 80%, in particular with only waste (100%), on the other hand, it is not possible to obtain final materials with aesthetic and mechanical characteristics useful for the production of artifacts.

Step c) is the one characterizing the present invention. As mentioned above, step c) may be performed, and preferably is performed, simultaneously with step b). In this step, a compatibilizer is added to the first mixture of step b). The compatibilizer is in turn a polymeric material and this one too is added to the first mixture in the form of granules, with sizes comparable to those of the virgin polymer or smaller. The compatibilizer is selected from a polyetheramide and a novolac.

Polyetheramides are copolymers of the general formula HO-(CO-PA-COO-PE-O)ₙ-H, wherein PA denotes a polyamide block (e.g. PA6, PA11 or PA12) and PE denotes a polyether block.

The polyetheramide used has relative viscosity in m-cresol between 1.18 and 1.38. In terms of Melt Flow Rate (MFR), analyses conducted according to standard ISO 1133, the polyetheramide used has MFR around 90 g/10 min.

Novolacs are resins obtained by reaction between formaldehyde and a phenol, with an aldehyde:phenol molar ratio of less than 1; unlike other phenolic resins, which are typically thermosetting (i.e., no longer reworkable after the first forming), novolacs are thermoplastics and therefore can be melted together with the components of the first mixture described above.

The novolac used has a weight average molecular weight, M_{w}, between 3500 and 6000, measured by GPC analysis.

A second mixture, which is then subjected to processing, is obtained by adding the compatibilizer to the first mixture.

The compatibilizer is used in a quantity such that its weight is between 0.8 and 1.2 times the weight of the minority component of the textile polymeric waste material of the first mixture, and preferably equal to the weight of said minority component. Just as an example, if the initial waste textile material contained 10% by weight of minority component and said material is used in an amount of 70% by weight in the first mixture, its total amount in said first mixture is equal to 7%, and the compatibilizer will be added in an amount by weight between 5.6%, and 8.4%, and preferably equal to 7%, with respect to the first mixture.

The second mixture thus obtained is then used in step d) to form the desired articles. The finished products are compounds produced by co-rotating twin-screw extrusion, compounds suitable for injection moulding or extrusion processes. Depending on the specific application and the requirements, compounds characterized by ductility and/or rigidity are developed. It is possible, in fact, to formulate the finished product with various additives in order to modulate viscosity, ductility, rigidity.

The invention described above will be further illustrated by the following examples.

### METHODS, TOOLS AND MATERIALS

### Materials used:

- Polyamide: PA6 or PA66 produced by the Radici Group, mainly polyamide having viscosity index between 120 mL/g and 150 mL/g as measured in sulphuric acid according to standard ISO 307;
- Polyetheramide: PEBAX^{®} MH 2030 (sold by Arkema, France);
- Novolac: phenol-formaldehyde resin FERS SF334B (sold by SBHPP, a division of Sumitomo Bakelite Co., Ltd.) having a weight average molecular weight, M_{w}, between 3500 and 6000 (as measured by GPC analysis) and used as a compatibilizer.

### Tools and methods:

Co-rotating twin-screw extruder;
Injection moulding press;
INSTRON 68TM dynamometer;
INSTRON 5566 dynamometer;
Charpy ZWICK pendulum;
DSC (differential scanning calorimetry) Perkin Elmer DSC Diamond;
JEOL scanning electron microscope (SEM).

### EXAMPLE 1

A textile waste constituted by polyamide PA66 containing about 10% by weight of polyurethane was ground by means of a first coarse grinding with blade mills, then recovering the particle size fraction smaller than 500 µm.

The granulate thus obtained was mixed in various proportions with granules of virgin PA66 and of PEBAX^{®} MH 2030 polyetheramide (hereinafter referred to as PEA). The virgin PA66 had a relative viscosity index measured in 96% sulphuric acid equal to 2.7. With the mixtures thus obtained, samples were produced in the form of specimens for mechanical characterizations carried out according to standards ISO 527-2 (tensile tests), ISO 178 (bend tests) and ISO 179/1 (Charpy impact tests) and analysis by SEM microscopy; the specimens for the tensile tests according to standard ISO 527-2 were bone-shaped, with sizes 170 mm (total length) x 20 mm (width of the two head parts) x 4 mm (thickness), and 115 mm (length) x 10 mm (width) of the central section, while the specimens for bend and Charpy impact tests were 80 x 10 x 4 mm in size. For each sample more specimens were produced to be used in the tests.

A sample according to the invention and two comparison samples were produced, in which no compatibilizer was added and one of which for reference was produced with only virgin PA66.

The mixing ratios of the components for the various samples are summarized in the following table (the samples marked with an asterisk are not part of the invention).

**Table 1**

| Sample | Composition (% by weight) | | |
|---|---|---|---|
| | PA66 | Waste | PEA |
| 1* | 100 | / | / |
| 2 | 47 | 47 | 6 |
| 3* | 50 | 50 | / |

### EXAMPLE 2

The samples produced in the previous example were subjected to a series of physical, chemical and mechanical characterizations. The results of these tests are reported in the table below.

**Table 2**

| Property | Units | Sample | | |
|---|---|---|---|---|
| | | 1* | 2 | 3* |
| Density | g/cm³ | 1.140 | 1.134 | 1.132 |
| Charpy impact with notch at 23 °C | KJ/m² | 5 | 5.6 (± 0.3) | 5.1 (± 0.9) |
| Charpy impact without notch at 23 °C | KJ/m² | NB | 171.6 (± 24.3) | 100.9 (± 49.2) |
| Tensile elastic modulus | MPa | 3000 | 2598 | 2920 |
| Yielding tensile strain | % | 4.7 | 4.23 | 4.08 |
| Yielding tensile stress | MPa | 80 | 63.49 | 74.43 |
| Tensile stress at break | MPa | / | 56.40 | 62.51 |
| Tensile strain at break | % | 35 | 50.29 | 41.18 |
| Flexural elastic modulus | MPa | 2900 | 2654 | 2980 |
| Flexural strength | MPa | 112 | 95.22 | 105.42 |
| Melting point | °C | 260 | 261.4 | 260.2 |
| Crystallization point | °C | / | 225.8 | 229.5 |

The comparison of the results of samples 2 and 3 shows that under the same conditions (1:1 weight ratio between virgin polymer and recovery from waste), the addition of compatibilizer significantly improves the impact resistance (Charpy with or without notch) and, above all, reduces the standard deviation of the values obtained, ensuring a better reproducibility of characteristics among different production batches.

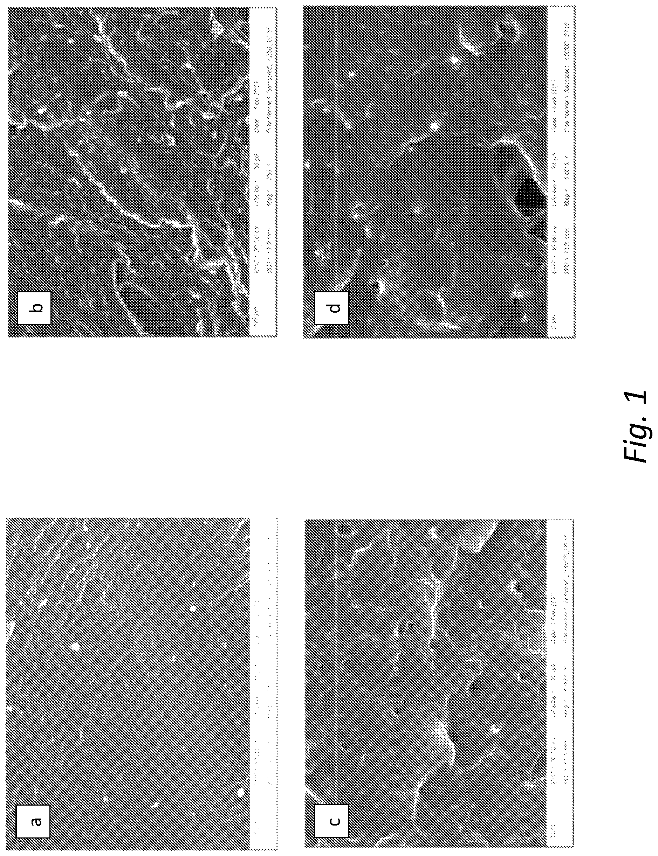

Morphological analyses were also carried out using SEM, by means of micrographs of the samples 2 and 3. The micrographs obtained are reproduced in Fig. 1: micrographs a and c in Fig. 1 are relative to sample 2, of the invention (at 250 and 8000 magnifications, respectively), while the micrographs b and d (again at 250 and 8000 magnifications, respectively) are relative to sample 3, for comparison. The micrographs of sample 3 show the presence of visible defects, caused by the poor dispersion of polyurethane in the sample, which determine the mechanical properties of this sample lower than those of sample 2.

### EXAMPLE 3

A textile waste constituted by polyamide PA6 containing 15% by weight of polyurethane was ground by means of a first coarse grinding with blade mills, then recovering the particle size fraction smaller than 500 µm.

This regranulate, used as a reference, was mixed with virgin PA6 (relative viscosity index measured in 96% sulphuric acid equal to 2.7) and PEA.

The mixing ratios of the components for the various samples are summarized in the following table (the samples marked with an asterisk are not part of the invention)

**Table 3**

| Sample | Composition (% by weight) | | |
|---|---|---|---|
| | PA6 | Waste | PEA |
| 4* | / | 100 | / |
| 5* | 70 | 30 | / |
| 6 | 65 | 30 | 5 |

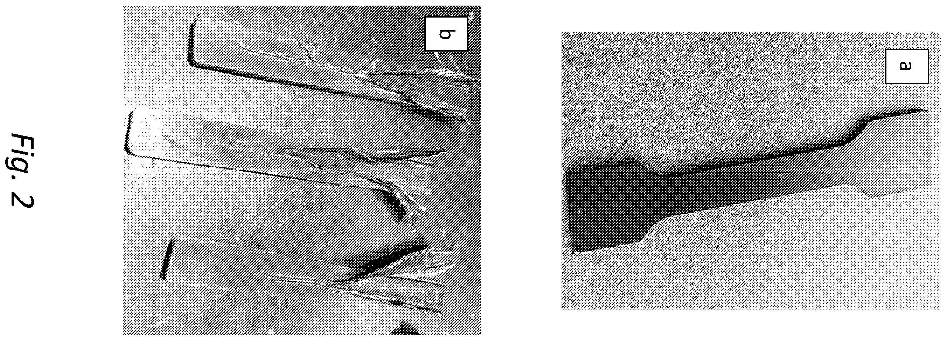

Figure 2a shows a specimen prepared for a tensile test with a mixture corresponding to sample 6 (invention), and highlights the good quality of the mixture, through the absence of surface defects.

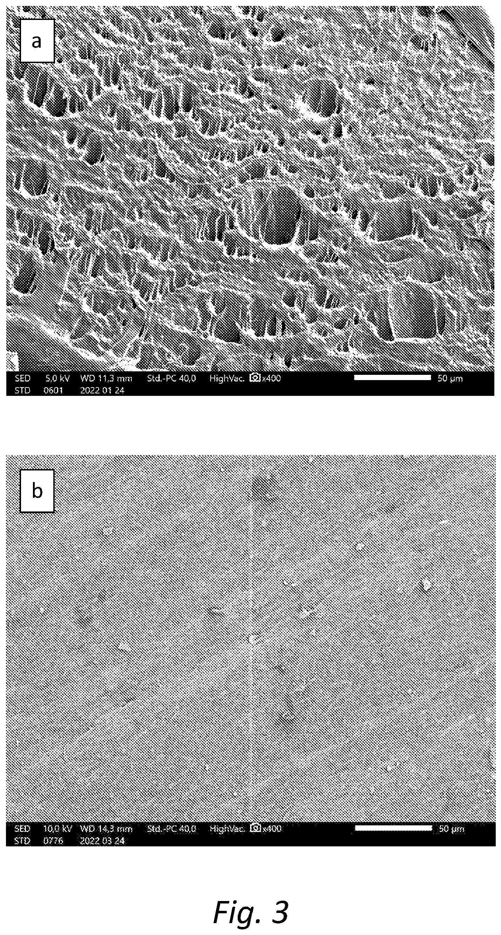

On the other hand, it was not possible to subject sample 4* to mechanical characterization, since the high PU portion prevents the injection moulding of ISO specimens: Figure 2b shows how the PU emerges to the surface preventing the injection moulding of the 80 x 10 x 4 mm specimens. The micrographs of samples 4* (Figure 3a) and 6 (Figure 3b) show how mixing with virgin PA and PEA allows to improve the dispersion of polyurethane within the polyamide matrix.

The produced samples 5* and 6 were subjected to a series of physical, chemical and mechanical characterizations. The results of these tests are reported in the table below.

**Table 4**

| Property | Units | Sample | |
|---|---|---|---|
| | | 5* | 6 |
| Density | g/cm³ | 1.133 | 1.133 |
| Charpy impact with notch at 23 °C | KJ/m² | 5.1 (± 0.2) | 6.6 (± 0.1) |
| Charpy impact without notch at 23 °C | KJ/m² | 90.2 (± 36.2) | No evidence of breakage |
| Tensile elastic modulus | MPa | 2434 | 2416 |
| Yielding tensile strain | % | 3.4 | 3.6 |
| Yielding tensile stress | MPa | 62.4 | 61.8 |
| Tensile stress at break | MPa | 43.6 | 43.2 |
| Tensile strain at break | % | 21.6 | 37.1 |
| Flexural elastic modulus | MPa | 2516 | 2425 |
| Flexural strength | MPa | 90 | 89 |

The comparison of the results of samples 5* and 6 shows that with the same dilution conditions, the addition of compatibilizer significantly improves the impact resistance and the elongation at break of the composite material.

## Claims

1. Process for the recycling of multicomponent polymeric waste materials comprising a polyamide and a polyurethane derived from industrial or post-consumer waste, comprising the following steps:
a) mechanical grinding of the multicomponent polymeric waste material, comprising a polyamide and a polyurethane, to obtain a granulate consisting of particles smaller than 1 mm;
b) addition of the granulate obtained in step a) to a virgin polymer corresponding to, or chemically compatible with, the majority component of the multicomponent polymeric waste material, in a quantity such that the weight ratio between the multicomponent polymeric waste material and the virgin polymer is between 1:3 and 4:1, obtaining a first mixture;
c) addition to the mixture of step b) of a compatibilizer selected between a polyetheramide of relative viscosity in m-cresol between 1.18 and 1.38 and a novolac with a weight average molecular weight, M_{w}, between 3500 and 6000, in a quantity such that the weight of the compatibilizer is between 0.8 and 1.2 times the weight of the minority component of the multicomponent polymeric waste material, obtaining a second mixture;
d) forming an article using said second mixture as starting material;
wherein steps b) and c) are performed sequentially or simultaneously.

2. Process according to claim 1, wherein said multicomponent polymeric waste material is a textile product.

3. Process according to any one of claims 1 or 2, wherein the granulate obtained in step a) has a particle size lower than 500 µm.

4. Process according to claim 3, wherein the granulate obtained in step a) has a particle size lower than 250 µm.

5. Process according to any one of the preceding claims, in which said multicomponent polymeric waste material is constituted for a fraction by weight of between 70 and 90% of polyamide, and said polyurethane is a thermosetting elastic polyurethane.

6. Process according to any one of the preceding claims, wherein the polyamide is PA6, PA66 or a mixture thereof.

7. Process according to any of the preceding claims, in which step a) is performed by cold grinding using liquid nitrogen.

8. Process according to any one of the preceding claims, in which in step c) the compatibilizer is used in an amount equal to the weight of the minority component of the multicomponent polymeric waste material.

9. Article obtained according to the process of any one of the preceding claims.

## Patentansprüche

1. Verfahren für das Recycling von Mehrkomponenten-Polymerabfallmaterialien, die ein Polyamid und ein Polyurethan aus Industrie- oder Post-Consumer-Abfällen umfassen, das die folgenden Schritte umfasst:
a) mechanisches Zerkleinern des Mehrkomponenten-Polymerabfallmaterials, das ein Polyamid und ein Polyurethan umfasst, um ein Granulat zu erhalten, das aus Partikeln kleiner als 1 mm besteht;
b) Zugabe des in Schritt a) erhaltenen Granulats zu einem neuen Polymer, das der Hauptkomponente des Mehrkomponenten-Polymerabfallmaterials entspricht oder mit dieser chemisch kompatibel ist, in einer solchen Menge, dass das Gewichtsverhältnis zwischen dem Mehrkomponenten-Polymerabfallmaterial und dem neuen Polymer zwischen 1 : 3 und 4 : 1 liegt, wodurch eine erste Mischung erhalten wird;
c) Zugabe eines Verträglichkeitsvermittlers zu der Mischung aus Schritt b), ausgewählt aus einem Polyetheramid mit einer relativen Viskosität in m-Kresol zwischen 1,18 und 1,38 und einem Novolak mit einem gewichtsmittleren Molekulargewicht M_{w} zwischen 3500 und 6000, in einer solchen Menge, dass das Gewicht des Verträglichkeitsvermittlers zwischen dem 0,8- und 1,2-Fachen des Gewichts der Nebenkomponente des Mehrkomponenten-Polymerabfallmaterials liegt, wodurch eine zweite Mischung erhalten wird;
d) Bilden eines Gegenstands unter Verwendung der zweiten Mischung als Ausgangsmaterial; wobei die Schritte b) und c) nacheinander oder gleichzeitig durchgeführt werden.

2. Verfahren nach Anspruch 1, wobei das Mehrkomponenten-Polymerabfallmaterial ein Textilprodukt ist.

3. Verfahren nach einem der Ansprüche 1 oder 2, wobei das in Schritt a) erhaltene Granulat eine Partikelgröße von weniger als 500 µm aufweist.

4. Verfahren nach Anspruch 3, wobei das in Schritt a) erhaltene Granulat eine Partikelgröße von weniger als 250 µm aufweist.

5. Verfahren nach einem der vorhergehenden Ansprüche, wobei das Mehrkomponenten-Polymerabfallmaterial zu einem Gewichtsanteil zwischen 70 und 90% aus Polyamid besteht und das Polyurethan ein duroplastisches elastisches Polyurethan ist.

6. Verfahren nach einem der vorhergehenden Ansprüche, wobei das Polyamid PA6, PA66 oder eine Mischung davon ist.

7. Verfahren nach einem der vorhergehenden Ansprüche, wobei Schritt a) durch Kaltmahlen unter Verwendung von Flüssigstickstoff durchgeführt wird.

8. Verfahren nach einem der vorhergehenden Ansprüche, wobei der Verträglichkeitsvermittler in Schritt c) in einer Menge verwendet wird, die dem Gewicht der Nebenkomponente des Mehrkomponenten-Polymerabfallmaterials entspricht.

9. Gegenstand, der gemäß dem Verfahren nach einem der vorhergehenden Ansprüche erhalten wird.

## Revendications

1. Procédé de recyclage de déchets polymères multicomposants comprenant un polyamide et un polyuréthane dérivé de déchets industriels ou postconsommation, comprenant les étapes suivantes :
a) broyage mécanique du déchet polymère multicomposant, comprenant un polyamide et un polyuréthane, pour obtenir un granulat constitué de particules inférieures à 1 mm ;
b) ajout du granulat obtenu à l'étape a) à un polymère vierge correspondant à, ou chimiquement compatible avec, le composant majoritaire du déchet polymérique multicomposant, en une quantité telle que le rapport pondéral entre le déchet polymérique multicomposant et le polymère vierge soit compris entre 1:3 et 4:1, obtenant un premier mélange ;
c) ajout au mélange de l'étape b) d'un compatibilisant choisi entre un polyétheramide de viscosité relative dans le m-crésol entre 1,18 et 1,38 et une novolaque à poids moléculaire moyen, M_{w}, entre 3500 et 6000, en une quantité telle que le poids du compatibilisant soit entre 0,8 et 1,2 fois le poids du composant minoritaire du déchet polymérique multicomposant, obtenant un deuxième mélange ;
d) formation d'un article en utilisant ledit deuxième mélange comme matériau de départ ; dans lequel les étapes b) et c) sont effectuées séquentiellement ou simultanément.

2. Procédé selon la revendication 1, dans lequel ledit déchet polymère multicomposant est un produit textile.

3. Procédé selon l'une quelconque des revendications 1 ou 2, dans lequel le granulat obtenu à l'étape
a) a une taille de particule inférieure à 500 µm.

4. Procédé selon la revendication 3, dans lequel le granulat obtenu à l'étape a) a une taille de particule inférieure à 250 µm.

5. Procédé selon l'une quelconque des revendications précédentes, dans lequel ledit déchet polymère multicomposant est constitué pour une fraction en poids entre 70 et 90 % de polyamide, et ledit polyuréthane est un polyuréthane élastique thermodurcissable.

6. Procédé selon l'une quelconque des revendications précédentes, dans lequel le polyamide est PA6, PA66 ou un mélange de ceux-ci.

7. Procédé selon l'une quelconque des revendications précédentes, dans lequel l'étape a) est effectuée par broyage à froid en utilisant de l'azote liquide.

8. Procédé selon l'une quelconque des revendications précédentes, dans lequel, à l'étape c), le compatibilisant est utilisé en une quantité égale au poids du composant minoritaire du déchet polymère multicomposant.

9. Article obtenu selon le procédé de l'une quelconque des revendications précédentes.
